# EUROPEAN PATENT APPLICATION

(11) **EP 4 391 417 A1**
(43) Date of publication of application: **26.06.2024**
(21) Application number: 22216095.4
(22) Date of filing: 22.12.2022
(51) Int. Cl.: H04B 10/70, H04L 9/12

(54) **METHOD AND DEVICE FOR CLOCK SYNCHRONIZATION IN QKD**

(71) Applicant: ID Quantique S.A., 1227 Carouge (CH)
(72) Inventor: VULLIEZ, Cédric, 1217 Meyrin (CH)
(74) Representative: KATZAROV S.A.

(57) **Abstract**

The present invention relates to a clock synchronization method comprising the steps of determining (S101) whether the emitter and the receiver are within acceptable frequency range difference, calculating (S102) a drift difference accumulated over a chosen time and obtaining a time compensation based on it, applying (S103) a compensation either to the clock phase shift or to the external frequency generator, and continuously (S104) tracking a frequency difference change between the emitter and the receiver by repeating the above steps.

## Description

### Technical Field

The present invention relates to a method and Device for clock synchronization in QKD.

### Background of the art

QKD systems are communication systems. More particularly, Quantum cryptography or Quantum Key Distribution (QKD) is a method allowing the distribution of a secret key between two distant parties, the emitter and the receiver, with a provable absolute security.

So, as for any kind of communication systems, the frequencies of the emitter "Alice" and the receiver "Bob" need to be synchronized.

The phase shift is usually expressed in angle between two clocks of the same frequency. However, if the phase shift of a clock is periodically changed by a certain angle compared to a reference clock, then its frequency is changed.

In prior art, it is usually the stream of data that is adjusted in order to match the clock frequency difference. In most serial protocols, inter packet gaps or skip symbols are sent periodically to address the frequency difference of the two systems (transmitter and receiver).

In quantum cryptography, two independent communication systems, e.g. an emitter and a receiver, never have the same exact frequency. Therefore, the clocks of these two systems have a certain deviation usually expressed in ppm. However, over time, this deviation, or frequency difference, creates a drift that becomes problematic and needs to be addressed in order to keep the two systems synchronized.

Many types of solutions exist depending on how much of a drift is allowed before the systems need to correct themselves and do a resynchronization.

In time-based synchronization when a drift is tolerated, especially satellite-based synchronization, a signal beacon is usually sent periodically from the master source and all other devices re-synchronize themselves on this signal. The drift is then defined from the accuracy difference from a Master clock and a slave clock over the period between two consecutive beacons.

When a drift is not tolerated, typically when sending or receiving high speed serialized data, usually the clock is sent over directly or indirectly with the data themselves. This could be done by having a dedicated clock signal sent in addition of data themselves or doing clock recovery from the data stream with the help of a Phase Lock Loop (PLL). This is done for example in all serial transmission protocols, such as Ethernet, USB, SATA.

Concerning QKD systems, the clock is usually shared between the emitter and the receiver with clock recovery on a serial data stream. This data stream is located either in a dedicated fiber or multiplexed with other streams such as the quantum channel, an example of which being the WDM architecture.

The classical way to synchronize the emitter and the receiver is to have two or three dedicated fibers. One from the Quantum channel, that Alice uses to send single photons to Bob, and two for the public channel, which can be multiplexed, to share the data and clock recovery in order to produce secret keys.

To reduce the number of fibers to one, the quantum channel as well as the two public channels needs to be multiplexed together, and demultiplexed on the opposite side.

WDM architectures where the quantum channel is multiplexed with the public channel generate more noise on the quantum channel after demultiplexing which affects the QBER (Quantum bit error Rate). This means that the distance and key rate using WDM is shorter and lower than without WDM.

There is therefore the need for a method permitting to remove the need for a dedicated uninterrupted channel between the two systems to share the system clock without having to pass through WDM architectures.

In this regard, a primary object of the invention is to solve the above-mentioned problems and more particularly to provide a device and a method permitting to synchronize and keep the synchronization of two independent systems to have the same time accurate reference.

### Summary of the invention

The above problems are solved by the present invention, which is a new way to synchronize two systems, preferably an emitter and a receiver, permitting to remove the need to pass through a dedicated medium such as an additional optical fiber, and doing clock recovery on it. One of the advantages is that it permits to use QKD systems where only a single quantum channel needs to be deployed, without the disadvantage of doing WDM on this unique fiber.

The basic principle comprises using quantum channel time detection arrival statistics to readjust the receiver's clock frequency to match the emitter's exact frequency. The way to keep the receiver at the same frequency as the emitter is to periodically phase shift the clock output to either increase or decrease the frequency. Over time, it permits to determine the velocity drift of the two different clocks and readjust it when needed.

This invention also proposes to change the clock frequency itself in order to keep the synchronization on the data. The main advantage for QKD systems is that it removes the need for a dedicated uninterrupted channel between the two systems to share the system clock without having to pass through WDM architectures.

This invention permits to only need a single dedicated fiber for the QKD deployment to work like the WDM architecture while not having to deal with the disadvantages of WDM on performance and additional cost on the system.

A first aspect of the invention is a clock synchronization method comprising the steps of determining whether the emitter and the receiver are within acceptable frequency range difference, calculating a drift difference accumulated over a chosen time and obtaining a time compensation based on it, applying a compensation either to the clock phase shift or to the external frequency generator, and continuously tracking a frequency difference change between the emitter and the receiver by repeating the above steps.

According to a preferred embodiment of the present invention, if the determining step determines that the emitter and the receiver are not in an acceptable frequency range difference, the system is configured to carry out a method to bring emitter and the receiver within an acceptable frequency range difference before the drift difference calculating step.

Preferably, the method to bring the emitter and the receiver within an acceptable frequency range difference comprises at least one of a pre-calibration method, a Velocity Ramp and an increase emission of photons per second.

Advantageously, the calculating step is carried out by using a data accumulation method on the receiver.

According to a preferred embodiment of the present invention, the data accumulation method is carried out by using an RX oversampling on the receiver.

Preferably, the RX oversampling comprises raising the resolution on the receiver so as to use the time of arrival of all Qubits on the receiver, independent of the sequence sent by the emitter, to match the drift using RX oversampling which are supposed to have no detections when the 2 clocks have the same frequency.

According to a preferred embodiment of the present invention, the calculating step is done by histograms analysis or by doing a Fast Fourier Transform (FFT).

Advantageously, the time compensation is calculated by at least one of a either time drift when using Clock phase shift method or by calculating drift in PPM directly when changing an external clock frequency.

Preferably, the time compensation is applied either by directly changing the clock frequency of at least one of the emitter and the receiver to its new one or by applying and changing the clock phase shift velocity to its compensated value at least one of the emitter and the receiver

A second aspect of the invention is QKD system provided with a single fiber without WDM using the Clock synchronization method of the first aspect as a frequency synchronization.

The particular advantages of this device of the invention being similar to the ones of the method of the first aspect of the invention, they will not be repeated here.

### Brief description of the drawings

Further particular advantages and features of the invention will become more apparent from the following non-limitative description of at least one embodiment of the invention which will refer to the accompanying drawings, wherein
- Figure 1 is a diagram showing the general method of the invention;
- Figure 2 represents an exemplary way to calculate the drift,

### Detailed description of the invention

The present detailed description is intended to illustrate the invention in a non-limitative manner since any feature of an embodiment may be combined with any other feature of a different embodiment in an advantageous manner.

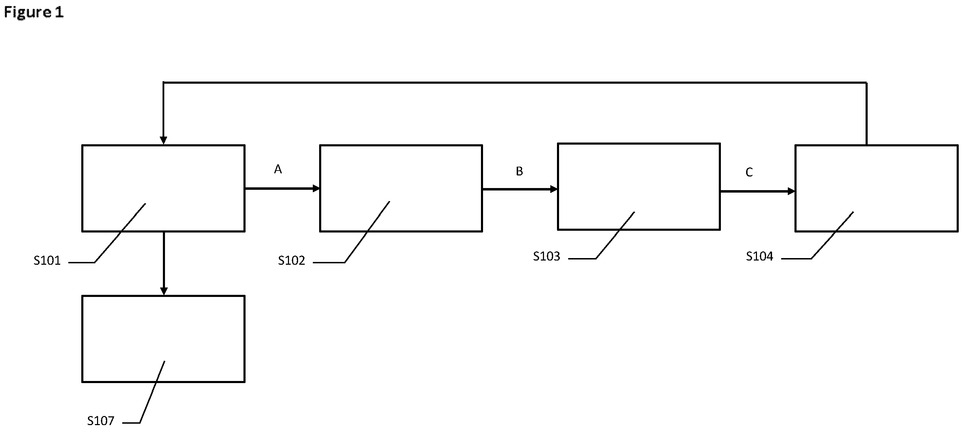

Figure 1 shows the first aspect of the invention which is a clock synchronization method in a quantum key distribution system.

The method comprises a first step S101 where one first determines whether the emitter and the receiver are within an acceptable frequency difference range.

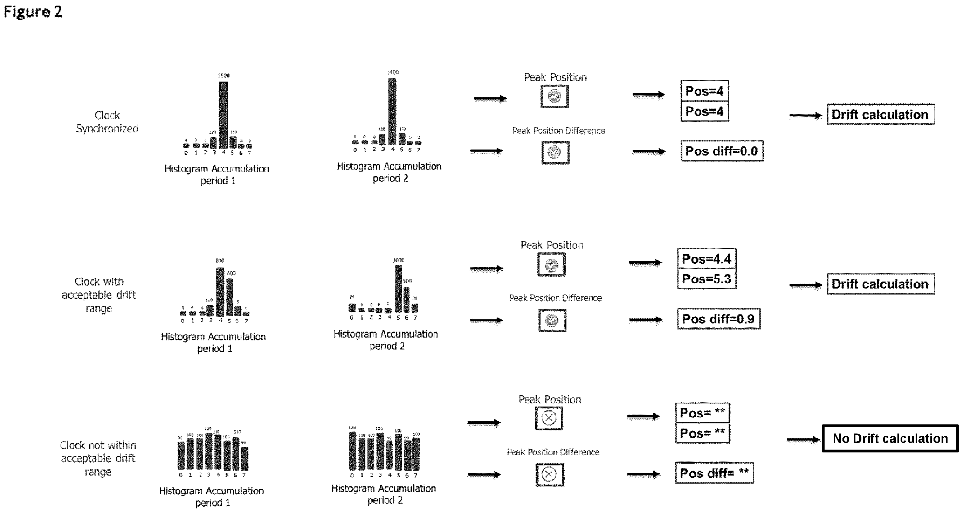

Figure 2 shows an example explaining one exemplary way to calculate determine the drift and determine whether the emitter and the receiver are within an acceptable frequency difference range.

In fact, there are multiple ways to calculate the drift and peak, especially considering the noise filtering before, the frequency regulation application speed.

In this example, for each accumulated period, the peak position is calculated, and one determine if the criterion for the acceptable range is met.

For example, if the criteria decided is that 75% of all detections should arrive within 2 oversampling times, histogram times can be added 2 by 2 and see if they regroup at least 75% of all detections.

The peak position is then calculated and compared to the last period to extract the difference over that period.

In the case of clocks not within the acceptable drift range, the histograms will appear "flat" with no peak, or false peak calculation.

In reality, depending on several factors such as the speed of the emitter, the accumulation time chosen, the distance between the emitter and the receiver and the precision of each clock frequency of the emitter and the receiver, the frequency difference between the emitter and the receiver may vary considerably, therefore a certain range of acceptable frequency difference and drift shall be determined into which one will be able to synchronize them. Practically, the threshold can be considered when the frequency difference looked at over a period of time exceeds the time between each Qbit.

In other words, if the QKD systems is running at 500Mhz, meaning a new Qbit is sent every 2ns.

A maximum frequency difference is 2ns, after which one does not know if it is 2ns or a multiple of 2ns. The frequency difference tolerated depends on the accumulation time. If the accumulation time is 1 sec, then the drift tolerance is 2ns/1sec = 0.002 ppm or 2ppb (parts per billion). If one reduces the accumulation time, and look at the drift over 10ms now, one has a tolerance 100x higher, at 0.2 ppm.

If the systems are not within this acceptable range, it is considered that it is not possible to calculate the exact drift or frequency difference and, one or more parameters from the list above need to be adjusted S107. In such cases, multiple methods exist, such as doing a pre-calibration before system deployment, between the clocks of the emitter and the receiver where both frequencies can be physically measured, compared, and adjusted. This can be done with any signal or frequency analyzer, such as an oscilloscope.

Another method can consist of changing and scanning different frequencies on one of the emitter and the receiver in order to come close enough to the other one of the emitter and the receiver's frequency so that an exact drift calculation can be done after. This can be done but it shall not be limited to increasing the rate at which a phase shift on a clock is applied which will result in the frequency being changed. Depending on the frequency physical source capabilities, the frequency itself can also be changed directly and scan a certain range with multiple small steps increment.

Another method can also consist of changing the photon's emission rate and/or decreasing the accumulation time. Both will result of having more or faster data to calculate the exact drift difference. In the case of increasing the emission rate, more detection per second will means the drift calculation can start sooner if the accumulation time is based on a certain number of data points instead of a certain accumulation time. In the case of decreasing the accumulation time, this can be done if the data obtained during this time is enough to extract the exact drift. If not, then both the emission rate and decreasing the accumulation time can be applied at the same time.

Once first step is achieved, if one determined that the emitter and the receiver are within an acceptable frequency difference range, the method passes to a second step S102 which consists in calculating the exact drift or frequency difference between the emitter and the receiver.

In order to carry out this calculation, the emitter and the receiver will use the RX oversampling rate on the receiver side to construct histograms or any data accumulation method. The RX oversampling is however preferred because it permits to be independent of any TX patterns or sequence.

Using a sampling rate faster than the emission rate allows to use any sequence of Qubits on the emission side and accumulate the time of arrival on the RX side to calculate the average time of arrival peak. By using multiple known accumulation periods and comparing the average time of arrival, it is then possible to calculate the time drift between multiple periods. Knowing the accumulation time period, the frequency drift can be calculated. This frequency drift can be calculated in multiple forms such as of an absolute frequency difference, in the form of a relative difference, usually put in PPM (part per million) or in the form of clock phase shift velocity, meaning how many phase shift steps to apply to the system clock per second. The method to extract the frequency drift can also be done with other mathematical tools if the data and speed permits it, such as using discrete Fourier transform (DFT) and analyze the frequency received.

Once the frequency drift has been identified a time compensation is obtained from it with a conversion in the format designed then step 2 is terminated and a third step S103 starts.

The third step S103 is a compensating step where the frequency of either side of the system, i.e. the emitter and the receiver, can be compensated to match the other based on the time compensation obtained, either by directly changing the clock frequency to its new one if physically applicable or by applying and changing the clock phase shift velocity to its new value.

Because the clock on each side will vary overtime in absolute frequency by drifting from their main frequencies, the tracking of the drift must be done continuously by repeating the steps above.

This also replaced any tracking needed for the fiber's length change happening due to temperature variations.

This invention is adapted to be exploited in QKD systems. One preferable embodiment of the invention is to implement the clock synchronization method of the invention in a QKD system using only a single fiber without WDM.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

## Claims

1. Clock synchronization method comprising the steps of:
determining (S101) whether the emitter and the receiver are within acceptable frequency range difference,
calculating (S102) a drift difference accumulated over a chosen time and obtaining a time compensation based on it,
applying (S103) a compensation either to the clock phase shift or to the external frequency generator, and
continuously (S104) tracking a frequency difference change between the emitter and the receiver by repeating the above steps.

2. Method according to claim 1, **characterized in that** if the determining step determines that the emitter and the receiver are not in an acceptable frequency range difference, the system is configured to carry out a method to bring emitter and the receiver within an acceptable frequency range difference before the drift difference calculating step.

3. Method according to claim 2, **characterized in that** the method to bring the emitter and the receiver within an acceptable frequency range difference comprises at least one of a pre-calibration method, a Velocity Ramp and an increase emission of photons per second.

4. Method according to any one of claims 1 to 3, **characterized in that** the calculating step is carried out by using a data accumulation method on the receiver.

5. Method according to claim 4, **characterized in that** the data accumulation method is carried out by using an RX oversampling on the receiver.

6. Method according to any one of claims 1 to 5, **characterized in that** the RX oversampling comprises raising the resolution on the receiver so as to use the time of arrival of all Qubits on the receiver, independent of the sequence sent by the emitter, to match the drift using RX oversampling which are supposed to have no detections when the 2 clocks have the same frequency.

7. Method according to any one of claims 1 to 6, **characterized in that** the calculating step is done by histograms analysis or by doing an FFT.

8. Method according to any one of claims 1 to 7, **characterized in that** the time compensation is calculated by at least one of a either time drift when using Clock phase shift method or by calculating drift in PPM directly when changing an external clock frequency.

9. Method according to any one of claims 1 to 8, **characterized in that** the time compensation is applied either by directly changing the clock frequency of at least one of the emitter and the receiver to its new one or by applying and changing the clock phase shift velocity to its compensated value at least one of the emitter and the receiver

10. QKD system provided with a single fiber without WDM using the Clock synchronization method of any one of claims 1-9 as a frequency synchronization.
